# FASCICULE DE BREVET EUROPEEN

(11) **EP 0 368 746 B1**
(45) Date de publication et mention de la délivrance du brevet: **29.12.1993**
(21) Numéro de dépôt: 89403060.0
(22) Date de dépôt: 07.11.1989
(51) Int. Cl.: G01S 13/76, G01S 13/78

(54) **Procédé pour échanger discrètement des signaux électromagnétiques entre un premier et un second poste émetteur-récepteur, et système pour la mise en oeuvre de ce procédé**
Verfahren zum diskreten Austauschen von elektromagnetischen Signalen zwischen einem ersten und einem zweiten Sende-Empfangsgerät und System zum Ausführen des Verfahrens
Method for the discrete exchange of electromagnetic signals between a first and a second transmitter-receiver, and system for carrying out the method

(30) Priorité: 10.11.1988 FR 8814676
(43) Date de publication de la demande: 16.05.1990
(73) Titulaire: LMT RADIO PROFESSIONNELLE, 92103 Boulogne-Billancourt (FR)
(72) Inventeur: Janex, Albert, F-92045 Paris la Défense (FR)
(74) Mandataire: Lincot, Georges

(56) Documents cités:
- EP-A- 0 127 088
- FR-A- 2 438 275
- GB-A- 1 605 283
- US-A- 3 699 570

## Description

La présente invention concerne un procédé pour échanger discrètement des signaux électromagnétiques entre un premier et un second poste émetteur- récepteur, ces signaux pouvant être des signaux pour communiquer de point à point, ou pouvant être des signaux d'identification ami-ennemi. La discrètion consiste à empêcher, autant que possible, une interception et un brouillage éventuel des signaux par un ennemi. La discrètion est une qualité souvent recherchée dans l'échange de signaux à usage militaire, parce que l'interception de ces signaux permet leur brouillage ou permet de déterminer la position des forces en présence,au moyen de la radiogoniométrie.

Il est connu d'assurer cette discrètion en utilisant des antennes d'émission très directives, pour que chacun des deux postes en liaison ne rayonne que vers l'autre. Ce procédé n'est applicable que dans les cas où les deux postes ont une connaissance préalable de leur position respective. Cette position peut être connue lorsque les deux postes ont une position fixe permanente, ou bien lorsqu'elle peut être connue par une mesure radiogoniométrique préalable. Cette contrainte interdit pratiquement toute application tactique de ce procédé, puisque la position des postes émetteurs-récepteurs est constamment changeante. Un tel procédé est connu du document GB.A.1 605 283.

Dans l'application à l'identification ami-ennemi, il n'est pratiquement pas possible de déterminer par radiogoniométrie la direction d'où vient l'interrogation, car il est rarement tolérable de perdre des interrogation pendant le temps nécessaire à cette détermination, ou alors il faut prévoir des récepteurs multiples, ce qui conduit à un coût prohibitif.

Le but de l'invention est de remédier aux inconvénients du procédé connu consistant à utiliser des antennes d'émission très directives. L'objet de l'invention est un procédé consistant essentiellement à indiquer au poste interrogé la direction où est situé le poste interrogateur, au moyen de données codées incorporées à chaque signal d'interrogation envoyé par le poste interrogateur. Ces données codées indiquent la direction dans laquelle est dirigée l'émission du poste interrogateur au moment où il envoie ce signal d'interrogation. Le poste interrogé en déduit la direction dans laquelle il doit envoyer son signal de réponse.

Selon l'invention il est réalisé un procédé pour échanger discrètement des signaux électromagnétiques entre un premier et un second poste émetteur-récepteur, le second ignorant la direction où est situé le premier, caractérisé en ce qu'il consiste à :
- émettre, au moyen du premier poste, au moins un signal d'interrogation dirigé dans la direction du second poste, ce signal d'interrogation comportant des données codées indiquant la direction dans laquelle il est émis ;
- recevoir, au moyen du second poste, ce signal d'interrogation, et décoder les données codées que contient ce signal, pour déterminer la direction dans laquelle est situé le premier poste ;
- émettre, au moyen du second poste, un signal de réponse dirigé uniquement dans la direction où est situé le premier poste.

L'invention sera mieux comprise et d'autres détails apparaîtront à l'aide de la description ci-dessous et des figures l'accompagnant :
- la figure 1 illustre schématiquement la mise en oeuvre du procédé selon l'invention ;
- la figure 2 représente le schéma synoptique d'un exemple de réalisation d'un système pour mettre en oeuvre le procédé selon l'invention, dans le cas d'une liaison dissymétrique, où un premier poste est toujours interrogateur et un second poste est toujours répondeur ;
- la figure 3 représente le schéma synoptique d'un exemple de réalisation pour mettre en oeuvre le procédé selon l'invention, dans le cas d'une liaison symétrique, où chaque poste peut être alternativement le poste interrogateur et le poste répondeur.

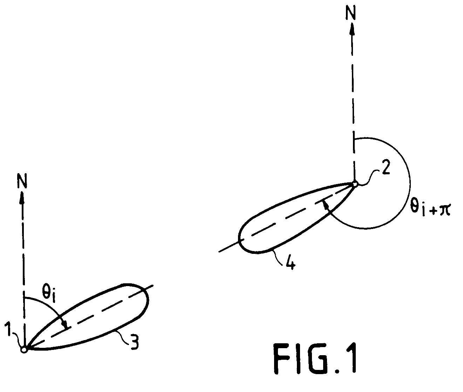

La figure 1 représente la situation relative de deux postes radio émetteurs-récepteurs, 1 et 2. Le poste 1 ayant l'initiative de l'échange de signaux radio-électriques, il est appelé poste interrogateur, alors que le poste 2 est appelé poste interrogé. Dans cet exemple, le poste 1 ignore la direction où est situé le poste 2. Il interroge dans toutes les directions pour déterminer les postes amis qui l'entourent, ou encore, dans un autre exemple, le poste 1 cherche à établir une communication téléphonique avec le poste 2.

Le poste 1 émet une suite de signaux d'interrogation respectivement dirigée dans une pluralité de directions, contenues dans un plan horizontal et régulièrement réparties autour d'un axe vertical. Ces directions font respectivement des angles ϑ1,...,ϑn, par rapport à une direction de référence N qui est par exemple la direction du Nord géographique. Pour cela, le poste 1 comporte une antenne directive dont le faisceau 3 a une direction commandable. Le nombre de directions dépend de la directivité du faisceau 3 de l'antenne d'émission du poste 1. Si cette antenne d'émission est très directive, le poste 1 émet successivement dans un grand nombre de directions afin de couvrir tout le plan horizontal, pour être certain que le poste 2 reçoive au moins un signal d'interrogation. Chaque signal d'interrogation comporte des données codées caractérisant un appel et des données codées indiquant la direction dans laquelle le signal d'interrogation est émis. Cette direction est définie par l'angle qu'elle fait avec une direction de référence absolue qui est, par exemple, la direction N du Nord géographique.

A un certain instant, le faisceau 3 est dirigé exactement dans la direction du poste 2 et fait alors un angle ϑi par rapport à la direction de référence N. A cet instant, le poste 2 peut recevoir le signal d'interrogation envoyé par le poste 1. Il décode les données codées indiquant la direction ϑi dans laquelle le signal d'interrogation a été émis et il en déduit la direction ϑi+¶ où est situé le poste 1. Le poste 2 répond par un signal convenu à l'avance et permettant d'identifier le poste 2. Il émet ce signal uniquement dans la direction faisant un angle ϑi + ¶ par rapport à la direction du Nord géographique. L'émission du signal de réponse est faite au moyen d'une antenne directive ayant un faisceau 4 dont la direction est commandable.

Ce procédé permet au poste 2 de répondre instantanément dans la direction du poste 1 tout en procurant un maximum de discrètion pour le poste 2. Les antennes d'émission du poste 1 et du poste 2 peuvent être identiques et peuvent être constituées de réseaux de dipôles couplés à des déphaseurs commandés électriquement, de technique classique. Ce type d'antenne directive permet d'orienter instantanément un faisceau d'ondes radio-électriques dans une direction donnée. Pour ne pas donner aux antennes des dimensions prohibitives, il est souhaitable d'utiliser des fréquences élevées. Ceci est peu envisageable dans la bande L qui est utilisée pour les systèmes classiques d'identification ami-ennemi pour aéronefs. Par contre, la réalisation de ces antennes est plus facile en ondes centimétriques, millimétriques, ou même dans le spectre visible ou infrarouge. Ces gammes d'ondes permettent notamment la réalisation de systèmes d'identification ami-ennemi pour les champs de bataille terrestres.

La directivité des antennes d'émission utilisées détermine la précision avec laquelle est codée la valeur de l'angle de la direction d'émission par rapport au Nord géographique. La direction du Nord géographique est donnée par un dispositif de navigation classique. Il suffit que cette direction du Nord géographique soit connue avec une précision au moins aussi bonne que la précision de la direction de rayonnement de l'antenne d'émission.

Lorsque l'application de ce procédé consiste à établir des communications durables entre les deux postes, l'émission des signaux d'interrogation dans une pluralité de directions multiples est arrêtée dès que le poste 1 reçoit la réponse envoyée par le poste 2. Le déplacement angulaire du faisceau 3 est alors arrêté. Il garde la direction ϑi par rapport à la direction du Nord géographique.

Le poste 2, ignorant au départ la direction de 1, doit être muni d'une antenne de réception omnidirectionnelle. Mais si l'échange d'information doit se prolonger, il pourra avantageusement, dès qu'il connaît la direction de 1, utiliser à la réception la même antenne directive qu'à l'émission. Il bénéficie alors du gain de cette antenne et se prémunit contre tout brouilleur qui n'est pas dans la direction de 1.

Dans certaines applications, il est possible d'obtenir aussi une discrétion du poste interrogateur 1, en évitant l'émission d'une pluralité de signaux d'interrogation respectivement dans une pluralité de directions autour du poste interrogateur 1. En effet, dans certaines applications telles que l'identification ami-ennemi sur un champ de bataille terrestre, il est possible de connaître la direction ϑi du poste 2, par des moyens discrets tels qu'un viseur optique. Ce viseur optique peut être couplé à un codeur de position angulaire, de technique classique, pour fournir la valeur ϑi à un dispositif de commande de l'orientation du faisceau 3. Dans ce cas, le poste 1 connaît préalablement la direction du poste 2. Il peut alors se contenter d'émettre un signal d'interrogation dans la direction ϑi où est situé le poste 2. Par exemple, dans un combat de char à char, un premier char peut procéder à l'identification ami-ennemi d'un second char en émettant un signal d'interrogation radio-électrique dans une direction déterminée préalablement au moyen d'un viseur optique, donc sans utiliser une pluralité de signaux d'interrogation émis dans toutes les directions.

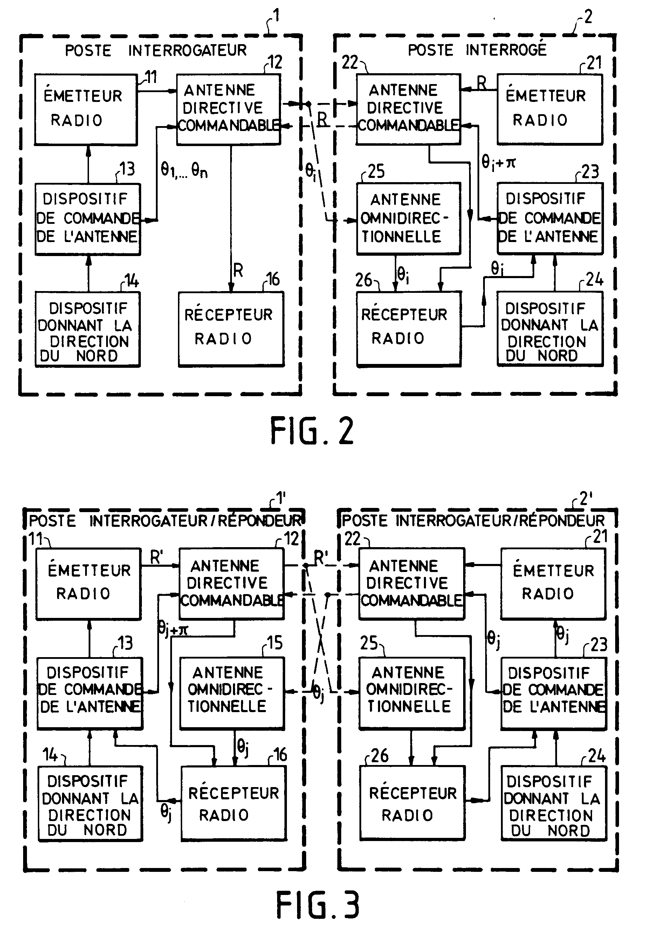

La figure 2 représente le schéma synoptique d'un exemple de réalisation d'un système pour la mise en oeuvre du procédé selon l'invention dans le cas d'une liaison dissymétrique. Ce système est par exemple un système d'identification ami-ennemi dans une bande de fréquences radio-électriques, mais il pourrait être appliqué tout aussi bien à l'établissement de communications radio-téléphoniques. D'autre part, un système tout à fait analogue peut être réalisé pour fonctionner dans le spectre visible ou infrarouge.

Le poste 1, est le seul poste interrogateur. Il comporte : un émetteur radio 11 ; une antenne directive commandable 12 ; un dispositif 13 de commande de l'antenne 12 ; un dispositif 14 donnant la direction du Nord géographique ; et un récepteur radio 16. Une sortie de l'émetteur radio 11 est reliée à une entrée de l'antenne 12. Une sortie du dispositif 13 est reliée à une entrée de commande de l'antenne 12 pour commander la direction de son rayonnement afin d'émettre successivement dans des directions ϑ1,...,ϑn, couvrant tout le plan horizontal.

Le dispositif 13 possède une entrée reliée à une sortie du dispositif 14 qui peut être, par exemple, un dispositif gyroscopique. Une entrée de l'émetteur radio 11 est reliée à la sortie du dispositif 13 pour recevoir la valeur ϑi de l'angle de la direction d'émission à l'instant considéré, afin de coder cette valeur ϑi et de la transmettre avec des données émises par le poste interrogateur 1. L'antenne directive 12 possède : une entrée reliée à une sortie de l'émetteur 11 ; une entrée reliée à une première sortie du dispositif 13 pour orienter la direction de son faisceau avec un angle ϑ=ϑ1,...,ϑn ; et une sortie reliée à une entrée du récepteur radio 16. Elle reçoit les signaux de réponse R émis notamment par le poste 2 qui constitue le poste répondeur dans cet exemple de fonctionnement.

Le poste 2 est toujours répondeur, et jamais interrogateur. Il comporte : un émetteur radio 21 ; une antenne directive commandable 22 ; un dispositif 23 de commande de l'antenne 22 ; un dispositif 24 donnant la direction du Nord ; une antenne omnidirectionnelle 25 ; et un récepteur radio 26. L'antenne omnidirectionnelle 25 possède une sortie reliée à une entrée du récepteur radio 26 pour lui permettre de recevoir les signaux d'interrogation provenant de toutes les directions possibles. Lorsque le récepteur radio 26 détecte un signal d'interrogation, il décode les données lui signifiant qu'il est appelé et les données codées indiquant la direction ϑi dans laquelle l'émission a été faite. Une sortie du récepteur radio 26 est reliée à une entrée du dispositif 23 de commande de l'antenne 22 pour lui fournir la valeur ϑi. Une autre entrée du dispositif 23 est reliée à une sortie du dispositif 24 donnant la direction du Nord, par exemple, au moyen d'un gyroscope.

Le dispositif 23 détermine la valeur ϑi + ¶ de l'angle entre la direction du Nord et la direction que doit avoir l'émission du poste répondeur 2 pour pouvoir atteindre le poste interrogateur 1. Cette valeur d'angle est fournie par une sortie du dispositif 23 à une entrée de commande de l'antenne directive commandable 22. L'antenne 22 reçoit sur une autre entrée un signal de réponse R fourni par une sortie de l'émetteur radio 21. Ce signal R est un signal codé identifiant le poste 2. Il est reçu par l'antenne omnidirectionnelle 15 du poste 1 et est décodé par son récepteur radio 16.

Si le système est utilisé pour un échange de communications et que les émissions de 1 vers 2 doivent se poursuivre, le poste 2 pourra avantageusement les recevoir par son antenne directive 22 puisqu'au delà du premier message, la direction ϑi+¶ est connue. Le poste 2 bénéficiera ainsi du gain apporté par l'antenne directive 22, et se protégera contre tout brouilleur ne se trouvant pas dans la direction du poste 1. Pour cela, une entrée du poste récepteur 26 reçoit les signaux en provenance de l'antenne directive 22.

D'une façon générale, il sera avantageux de symétriser les postes 1 et 2. S'il s'agit d'un système de communication, il est souhaitable que tout abonné puisse être appelant. S'il s'agit d'identification, il est souvent nécessaire qu'un interrogateur puisse lui-même se faire identifier par un autre interrogateur. Il devra alors jouer le rôle de répondeur. On peut ainsi aboutir à des postes 1 et 2 identiques cumulant les fonctions d'interrogateur et de répondeur.

La figure 3 représente le schéma synoptique d'un exemple de réalisation d'un système pour une liaison symétrique, un poste 1′ et un poste 2′ pouvant être alternativement interrogateur et répondeur. Le poste 1′ comporte les mêmes éléments que le poste 1 décrit précédemment, plus une antenne omnidirectionnelle 15 reliée à une entrée supplémentaire du récepteur 16 pour recevoir les signaux d'interrogation. Le récepteur 16 possède une sortie supplémentaire, reliée à une entrée du dispositif 13 pour lui fournir la valeur d'angle ϑⱼ définissant la direction d'où vient un signal d'interrogation.

Le poste 2′ comporte les mêmes éléments que le poste 2, mais l'émetteur radio 21 comporte une entrée supplémentaire, reliée à une sortie supplémentaire du dispositif 23, pour recevoir chaque valeur d'angle ϑⱼ définissant une direction d'émission lorsque le poste 2 est utilisé comme poste interrogateur. Simultanément, la valeur ϑⱼ est fournie à l'antenne directive 22 pour orienter son faisceau. Le poste 1′ répond par un signal R′, fourni par l'émetteur 11 et émis par l'antenne directive 12, dans la direction ϑⱼ+¶ calculée par le dispositif 13. Le signal de réponse R′ est reçu par l'antenne directive 22, dans la direction ϑⱼ.

L'invention ne se limite pas aux exemples de réalisations décrits ci-dessus. De nombreuses variantes sont à la portée de l'homme de l'art. Par exemple, il est envisageable de réaliser ce système dans le spectre visible ou infrarouge.

La réalisation d'antennes radio directives dont la direction d'émission est commandable électriquement est très classique. Des optiques d'émission directive orientables peuvent être réalisées aussi par des techniques classiques pour le spectre visible ou le spectre infrarouge.

L'invention est applicable notamment aux radio-communications militaires et à l'identification ami-ennemi.

## Revendications

1. Procédé pour échanger discrètement des signaux électromagnétiques entre un premier et un second poste émetteur-récepteur (1,2), le second ignorant la direction où est situé le premier, le procédé consistant à :
- émettre, au moyen du premier poste (1), au moins un signal d'interrogation contenu dans un faisceau directif dirigé dans la direction (ϑi) du second poste (2), ce signal d'interrogation comportant des données codées indiquant la direction (ϑi) dans laquelle il est émis ;
- recevoir, au moyen du second poste (2), ce signal d'interrogation, et décoder les données codées que contient ce signal, pour déterminer la direction (ϑi + ¶) dans laquelle est situé le premier poste (1) ;
- émettre, au moyen du second poste (2), un signal de réponse dirigé uniquement dans la direction (ϑi + ¶) où est situé le premier poste (1).

2. Procédé selon la revendication 1, dans lequel le premier poste (1) ignore la direction où est situé le second poste (2), caractérisé en ce qu'il consiste à émettre, au moyen du premier poste (1), une suite de signaux d'interrogations respectivement dirigés dans une pluralité de directions (ϑi,...,ϑn), chaque signal d'interrogation comportant des données codées indiquant la direction (ϑi) dans laquelle ce signal d'interrogation est émis.

3. Procédé selon la revendication 1, caractérisé en ce qu'il consiste à déterminer préalablement la direction (ϑi) où est situé le second poste (2) par rapport au premier poste (1), par des moyens discrets ; puis à émettre, au moyen du premier poste (1) un signal d'interrogation unique, dirigé dans la direction (ϑi) où est situé le second poste (2).

4. Système pour la mise en oeuvre du procédé selon la revendication 1, comportant un premier et un second poste (1,2), système selon lequel le premier poste (1) comporte :
- des moyens (11 à 14) pour émettre au moins un signal d'interrogation contenu dans un faisceau directif dirigé dans la direction (ϑi) du second poste (2), ce signal d'interrogation comportant des données codées indiquant la direction (ϑi) dans laquelle il est émis ;
- des moyens (15,16) pour recevoir un signal de réponse, au moins dans la direction (ϑi) où a été émis un signal d'interrogation ;
et en ce que le second poste (2) comporte :
- des moyens (25,26) pour recevoir, dans toutes les directions, des signaux d'interrogation, et décoder des données codées contenues dans un signal d'interrogation reçu, et en déduire la direction (ϑi+¶) dans laquelle est située le poste (1), qui a émis ce signal ;
- des moyens (21 à 24) pour émettre un signal de réponse (R) dans la direction (ϑi + ¶) où est situé le poste (1) qui a émis le signal d'interrogation.

5. Système selon la revendication 4, caractérisé en ce que, dans le premier poste (1), les moyens pour émettre comportent des moyens (11 à 13) pour émettre une suite de messages d'interrogation respectivement dans une pluralité de directions (ϑ1,...ϑn), chaque signal d'interrogation comportant respectivement des données codées indiquant la direction (ϑi) dans laquelle le signal d'interrogation est émis.

6. Système selon la revendication 4, caractérisé en ce que le premier poste comporte en outre des moyens discrets pour déterminer la direction (ϑi) où est situé le second poste (2) ; et en ce que les moyens pour émettre (11 à 14), du premier poste (1) comportent des moyens (11 à 13) pour émettre un message d'interrogation seulement dans la direction (ϑi) déterminée par lesdits moyens discrets.

7. Système selon l'une quelconque des revendications 5 ou 6, caractérisé en ce que les moyens pour émettre (11 à 14) du premier poste (1) et les moyens pour émettre (21 à 24), du second poste (2), comportent :
- une antenne directive (12,22) dont la direction de rayonnement est commandable électriquement ;
- un dispositif (14,24) de détermination d'une direction de référence absolue (N) ;
- un dispositif (12,22) de commande de l'antenne (11,21), commandant la direction de rayonnement en fonction de la direction de référence (N) et en fonction d'un angle donné (ϑi, ϑi + ¶).

## Claims

1. Method for discreetly exchanging electromagnetic signals between a first and a second transmitter/receiver post (1, 2), the second being ignorant of the direction in which the first is located, the method consisting in:
- transmitting, by means of the first post (1), at least one interrogation signal contained in a directional beam directed in the direction (ϑi) of the second post (2), this interrogation signal including coded data indicating the direction (ϑi) in which it is transmitted;
- receiving, by means of the second post (2), this interrogation signal, and decoding the coded data which this signal contains, in order to determine the direction (ϑi+π) in which the first post (1) is located;
- transmitting, by means of the second post (2), a response signal directed solely in the direction (ϑi+π) in which the first post (1) is located.

2. Method according to Claim 1, in which the first post (1) is ignorant of the direction in which the second post (2) is located, characterized in that it consists in transmitting, by means of the first post (1), a sequence of interrogation signals directed respectively in a plurality of directions (ϑi,...,ϑn), each interrogation signal including coded data indicating the direction (ϑi) in which this interrogation signal is transmitted.

3. Method according to Claim 1, characterized in that it consists in previously determining the direction (ϑi) in which the second post (2) is located with respect to the first post (1), by discreet means; then in transmitting, by means of the first post (1), a sole interrogation signal directed in the direction (ϑi) in which the second post (2) is located.

4. System for the implementation of the method according to Claim 1, including a first and a second post (1, 2), a system according to which the first post (1) includes:
- means (11 to 14) for transmitting at least one interrogation signal contained in a directional beam directed in the direction (ϑi) of the second post (2), this interrogation signal including coded data indicating the direction (ϑi) in which it is transmitted;
- means (15, 16) for receiving a response signal, at least in the direction (ϑi) in which an interrogation signal has been transmitted;
and in that the second post (2) includes:
- means (25, 26) for receiving, in all directions, interrogation signals, and decoding coded data contained in a received interrogation signal, and deducing therefrom the direction (ϑi+π) in which the post (1) which transmitted this signal is located;
- means (21 to 24) for transmitting a response signal (R) in the direction (ϑi+π) in which the post (1) which transmitted the interrogation signal is located.

5. System according to Claim 4, characterized in that, in the first post (1), the means for transmitting include means (11 to 13) for transmitting a sequence of interrogation messages respectively in a plurality of directions (ϑi,...ϑn), each interrogation signal including respectively coded data indicating the direction (ϑi) in which the interrogation signal is transmitted.

6. System according to Claim 4, characterized in that the first post furthermore includes discreet means for determining the direction (ϑi) in which the second post (2) is located; and in that the means for transmitting (11 to 14), of the first post (1), include means (11 to 13) for transmitting an interrogation message only in the direction (ϑi) determined by the said discreet means.

7. System according to either one of Claims 5 or 6, characterized in that the means for transmitting (11 to 14) of the first post (1) and the means for transmitting (21 to 24), of the second post (2), include:
- a directional antenna (12, 22) whose direction of radiation is electrically controllable;
- a device (14, 24) for determining an absolute reference direction (N);
- a device (12, 22) for control of the antenna (11, 21), controlling the direction of radiation as a function of the reference direction (N) and as a function of a given angle (ϑi, ϑi+π).

## Patentansprüche

1. Verfahren zum diskreten Austauschen von elektromagnetischen Signalen zwischen einer ersten und einer zweiten Sende-/Empfangsstation (1, 2), wobei die zweite die Richtung, in der sich die erste befindet, nicht kennt, wobei das Verfahren darin besteht, daß:
- mittels der ersten Station (1) wenigstens ein Abfragesignal ausgesandt wird, das in einem in Richtung (ϑi) auf die zweite Station (2) gelenkten Richtstrahl enthalten ist, wobei dieses Abfragesignal codierte Daten enthält, die die Richtung (ϑi) angeben, in der es ausgesandt wird;
- mittels der zweiten Station (2) dieses Abfragesignal empfangen wird und die codierten Daten, die dieses Signal enthält, decodiert werden, um die Richtung (ϑi + π) zu bestimmen, in der sich die erste Station (1) befindet;
- mittels der zweiten Station (2) ein Antwortsignal ausgesandt wird, das ausschließlich in die Richtung (ϑi + π) gelenkt wird, in der sich die erste Station (1) befindet.

2. Verfahren gemäß Anspruch 1, in dem die erste Station (1) die Richtung, in der sich die zweite Station (2) befindet, nicht kennt, dadurch gekennzeichnet, daß es darin besteht, mittels der ersten Station (1) eine Folge von Abfragesignalen auszusenden, die in mehrere Richtungen (ϑi,...,ϑn) gelenkt werden, wobei jedes Abfragesignal codierte Daten enthält, die die Richtung (ϑi) angeben, in der dieses Abfragesignal ausgesandt wird.

3. Verfahren gemäß Anspruch 1, dadurch gekennzeichnet, daß es darin besteht, im voraus die Richtung (ϑi), in der sich die zweite Station (2) in bezug auf die erste Station (1) befindet, durch diskrete Mittel zu bestimmen; daß dann mittels der ersten Station (1) ein einziges Abfragesignal ausgesandt wird, das in die Richtung (ϑi) gelenkt wird, in der sich die zweite Station (2) befindet.

4. System zum Ausführen des Verfahrens gemäß Anspruch 1, mit einer ersten und einer zweiten Station (1,2), wobei gemäß diesem System die erste Station (1) umfaßt:
- Mittel (11 bis 14), um wenigstens ein Abfragesignal auszusenden, das in einem in Richtung (ϑi) auf die zweite Station (2) gelenkten Richtstrahl enthalten ist, wobei dieses Abfragesignal codierte Daten enthält, die die Richtung (ϑi) angeben, in der es ausgesandt wird;
- Mittel (15, 16), um ein Antwortsignal wenigstens in der Richtung (ϑi) zu empfangen, in der ein Abfragesignal ausgesandt worden ist; und die zweite Station (2) umfaßt:
- Mittel (25, 26), um in sämtlichen Richtungen Abfragesignale zu empfangen und codierte Daten zu decodieren, die in einem empfangenen Abfragesignal enthalten sind, und um daraus die Richtung (ϑi + π) abzuleiten, in der sich die Station (1) befindet, die dieses Signal ausgesandt hat;
- Mittel (21 bis 24), um ein Antwortsignal (R) in die Richtung (ϑi + π) auszusenden, in der sich die Station (1) befindet, die das Abfragesignal ausgesandt hat.

5. System gemäß Anspruch 4, dadurch gekennzeichnet, daß in der ersten Station (1) die Mittel zum Senden Mittel (11 bis 13) zum Senden einer Folge von Abfragenachrichten in mehreren Richtungen (ϑ1,...,ϑn) aufweisen, wobei jedes Abfragesignal jeweils codierte Daten enthält, die die Richtung (ϑi) angeben, in der das Abfragesignal ausgesandt wird.

6. System gemäß Anspruch 4, dadurch gekennzeichnet, daß die erste Station außerdem diskrete Mittel enthält, um die Richtung (ϑi) zu bestimmen, in der sich die zweite Station (2) befindet; und daß die Mittel zum Senden (11 bis 14) der ersten Station (1) Mittel (11 bis 13) aufweisen, um eine Abfragenachricht ausschließlich in der von den diskreten Mitteln bestimmten Richtung (ϑi) zu senden.

7. System gemäß einem der Ansprüche 5 oder 6, dadurch gekennzeichnet, daß die Mittel zum Senden (11 bis 14) der ersten Station (1) und die Mittel zum Senden (21 bis 24) der zweiten Station (2) umfassen:
- eine Richtantenne (12, 22), deren Strahlungsrichtung elektrisch gesteuert werden kann;
- eine Einrichtung (14, 24) für die Bestimmung einer absoluten Bezugsrichtung (N);
- eine Einrichtung (12, 22) zum Steuern der Antenne (11, 21), die die Strahlungsrichtung in Abhängigkeit von der Bezugsrichtung (N) und in Abhängigkeit von einem gegebenen Winkel (ϑi, ϑi + π) steuert.
